# EUROPEAN PATENT SPECIFICATION

(11) **EP 0 274 413 B1**
(45) Date of publication and mention of the grant of the patent: **03.04.1996**
(21) Application number: 88300028.3
(22) Date of filing: 05.01.1988
(51) Int. Cl.: G06F 9/46, G06F 15/16

(54) **Process traps in a distributed message-based system**
Prozess-Traps in einem verteilten auf Nachrichten gegründeten System
Pièges de processus dans un système réparti, basé sur des messages

(30) Priority: 05.01.1987 US 624
(43) Date of publication of application: 13.07.1988
(73) Proprietor: COMPUTER X, INC., Schaumburg Illinois 60195 (US)
(72) Inventor: Simor, Gabor, Barrington Illinois 60010 (US)
(74) Representative: Hudson, Peter David

(56) References cited:
- COMPUTER. vol. 15, no. 10, October 1982, LONG BEACH, US pages 54 - 68; K.A. LANTZ ET AL.: 'ROCHESTER'S INTELLIGENT GATEWAY'
- IBM TECHNICAL DISCLOSURE BULLETIN. vol. 19, no. 6, November 1976, NEW YORK, US pages 2159 - 2167; L. WYMAN: 'INTERMEMORY COMMUNICATIONS FACILITY'
- IBM TECHNICAL DISCLOSURE BULLETIN. vol. 17, no. 11, April 1975, NEW YORK, US pages 3234 - 3237; J.K. BOGGS JR.: "PROGRAM EVENT SIGNALING"

## Description

### RELATED INVENTIONS

The present invention is related to the following inventions, all filed on May 6, 1985, and all assigned to the assignee of the present invention:
1.
   - Title:: Nested Contexts in a Virtual Single Machine
   - Inventors:: Andrew Kun, Frank Kolnick, Bruce Mansfield EP-A-0201065
2.
   - Title:: Computer System With Data Residence Transparency and Data Access Transparency
   - Inventors:: Andrew Kun, Frank Kolnick, Bruce Mansfield EP-A-0201064
3.
   - Title:: Network Interface Module With Minimized Data Paths
   - Inventors:: Bernhard Weisshaar, Michael Barnea EP-A-0201063
4.
   - Title:: Method of Inter-Process Communication in a Distributed Data Processing System
   - Inventors:: Bernhard Weisshaar, Andrew Kun, Frank Kolnick, Bruce Mansfield EP-A-0201063
5.
   - Title:: Logical Ring in a Virtual Single Machine
   - Inventor:: Andrew Kun, Frank Kolnick, Bruce Mansfield EP-A-0201065
6.
   - Title:: Virtual Single Machine With Message-Like Hardware Interrupts and Processor Exceptions
   - Inventors:: Andrew Kun, Frank Kolnick, Bruce Mansfield EP-A-0201065

The present invention is also related to the following inventions, all filed on even date herewith, and all assigned to the assignee of the present invention:
7.
   - Title:: Computer Human Interface Comprising User-Adjustable Window for Displaying or Printing Information
   - Inventor:: Frank Kolnick EP-A-0274087
8.
   - Title:: Computer Human Interface With Multi-Application Display
   - Inventor:: Frank Kolnick EP-A-0274087
9.
   - Title:: Object-Oriented Software Architecture Supporting Input/Output Device Independence
   - Inventor:: Frank Kolnick EP-A-0274087
10.
   - Title:: Self-Configuration of Nodes in a Distributed Message-Based Operating System
   - Inventors:: Gabor Simor EP-A-0274413
11.
   - Title:: Computer Human Interface With Multiple Independent Active Pictures and Windows
   - Inventors:: Frank Kolnick EP-A-0274087

### TECHNICAL FIELD

This invention relates generally to digital data processing, and, in particular, to an operating system in which a notification message may be requested whenever a specified process is created or terminated.

### BACKGROUND OF THE INVENTION

The present invention is implemented in a distributed data processing system - that is, two or more data processing systems which are capable of functioning independently but which are so coupled as to send and receive messages to and from one another.

Local Area Network (LAN) is an example of a distributed data processing system. A typical LAN comprises a number of autonomous data processing "nodes", each comprising at least a processor and memory. Each node is capable of conducting data processing operations independently. In addition, each node is coupled (by appropriate means such as a twisted wire pair, coaxial cable, fiber optic cable, etc.) to a network of other nodes which may be, for example, a loop, star, tree, etc., depending upon the design considerations.

As mentioned above, the present invention finds utility in such a distributed data processing system, since there is a need in such a system for processes which are executing or which are to be executed in the individual nodes to share data and to communicate data among themselves.

A "process", as used within the present invention, is defined as a self-contained package of data and executable procedures which operate on that data, comparable to a "task" in other known systems. Within the present invention a process can be thought of as comparable to a subroutine in terms of size, complexity, and the way it is used. The difference between processes and subroutines is that processes can be created and destroyed dynamically and can execute concurrently with their creator and other "subroutines".

Within a process, as used in the present invention, the data is totally private and cannot be accessed from the outside, i.e., by other processes. Processes can therefore be used to implement "objects", "modules", or other higher-level data abstractions. Each process executes sequentially. Concurrency is achieved through multiple processes, possibly executing on multiple processors.

Every process in the distributed data processing system of the present invention has a unique identifier (PID) by which it can be referenced. The PID is assigned by the system when the process is created, and it is used by the system to physically locate the process.

Every process also has a non-unique, symbolic "name", which is a variable-length string of characters. In general, the name of a process is known system-wide. To restrict the scope of names, the present invention utilizes the concept of a "context".

A "context" is simply a collection of related processes whose names are not known outside of the context. Contexts partition the name space into smaller, more manageable subsystems. They also "hide" names, ensuring that processes contained in them do not unintentionally conflict with those in other contexts.

A process in one context cannot explicitly communicate with, and does not know about, processes inside other contexts. All interaction across context boundaries must be through a "context process", thus providing a degree of security. The context process often acts as a switchboard for incoming messages, rerouting them to the appropriate sub-processes in its context.

A context process behaves like any other process and additionally has the property that any processes which it creates are known only to itself and to each other. Creation of the process constitutes definition of a new context with the same name as the process.

Any process can create context processes. Each new context thus defined is completely contained inside the context in which it was created and therefore is shielded from outside reference. This "nesting" allows the name space to be structured hierarchically to any desired depth.

Conceptually, the highest level in the hierarchy is the system itself, which encompasses all contexts. Nesting is used in top-down design to break a system into components or "layers", where each layer is more detailed than the preceding one. This is analogous to breaking a task down into subroutines, and in fact many applications which are single tasks on known systems may translate to multiple processes in nested contexts.

A "message" is a buffer containing data which tells a process what to do and/or supplies it with information it needs to carry out its operation. Each message buffer can have a different length (up to 64 kilobytes). By convention, the first field in the message buffer defines the type of message (e.g., "read", "print", "status", "event", etc.).

Messages are queued from one process to another by name or PID. Queuing avoids potential synchronization problems and is used instead of semaphores, monitors, etc. The sender of a message is free to continue after the message is sent. When the receiver attempts to get a message, it will be suspended until one arrives if none are already waiting in its queue. Optionally, the sender can specify that it wants to wait for a reply and is suspended until that specific message arrives. Messages from any other source are not dequeued until after that happens.

Within the present invention, messages are the only way for two processes to exchange data. There is no concept of a "global variable". Shared memory areas are not allowed, other than through processes which essentially "manage" each area by means of messages. Messages are also the only form of dynamic memory that the system handles. A request to allocate memory therefore returns a block of memory which can be used locally by the process but can also be transmitted to another process.

Messages provide the mechanism by which transparency is achieved. A process located anywhere in the system may send a message to any other process anywhere else in the system (even on another processor) if it knows the process name. This means that processes can be dynamically distributed across the system at any time to gain optimal throughput without changing the processes which reference them. Resolution of destinations is done by searching the process name space.

The context nesting level determines the "scope of reference" when sending messages between processes by name. From a given process, a message may be sent to all processes at its own level (i.e., in the same context) and (optionally) to any arbitrary higher level. The contexts are searched from the current context upward until a match is found. All processes with the given name at that level are then sent a copy of the message. A process may also send a message to itself or to its parent (the context process) without knowing either name explicitly, permitting multiple instances of a process to exist in different contexts, with different names.

Sending messages by PID obviates the need for a name search and ignores context boundaries. This is the most efficient method of communicating.

In known data processing systems a process control block (PCB) is used to describe various attributes and the status of processes, including the status of resources used by the processes. Examples of such resources are files, data storage devices, I/O devices, ports, etc.

The operating system of the present invention utilizes PCB's too, but they do not have to keep track of the status of processes or resources used by the processes, thus enabling the system to be more modular and reconfigurable.

However, it is still desirable to provide the capability of monitoring the status of processes within the operating system of the present invention, and in particular the fact that a process has been created or terminated.

There is a significant need to be able to provide within a data processing operating system the ability for a process to request to be notified when a designated process has been created and/or terminated. In addition, there is a need for such notification to occur within several organization levels, such as one context of processes, one node, or an entire network.

From the publication "Computer", vol. 15, October 1982, pages 54-68 there are known methods of providing a notification message when a process is created and terminated on one of the nodes of a distributed data processing system as respectively recited in the precharacterising portion of claim 1 and claim 6.

### BRIEF SUMMARY OF INVENTION

Accordingly, it is an object of the present invention to provide an improved method of providing a notification message.

In accordance with a first aspect of the invention there is provided a method of providing a notification message as claimed in claim 1.

In accordance with a second aspect of the invention there is provided a method of providing a notification message as claimed in claim 6.

### BRIEF DESCRIPTION OF THE DRAWINGS

The invention is pointed out with particularity in the appended claims. However, other features of the invention will become more apparent and the invention will be best understood by referring to the following detailed description in conjunction with the accompanying drawings in which:

FIG. 1 shows a representational illustration of a single network, distributed message-based data processing system of the type incorporating the present invention.

FIG. 2 shows a block diagram illustrating a multiple-network, distributed message-based data processing system of the type incorporating the present invention.

FIG. 3 shows an architectural model of a data processing system of the type incorporating the present invention.

FIG. 4 shows the relationship between software contexts and processes as they relate to the present invention.

FIG. 5 shows the relationship between a user process and a resource process as they relate to the present invention.

FIG. 6 shows how messages may be sent between processes within nested contexts in the data processing system of the present invention.

FIG. 7 shows the standard format of a message in the distributed message-based data processing system of the type incorporating the present invention.

FIG. 8 shows how Process Creation Trap (PCT) messages and Process Termination Trap (PTT) messages are sent between Process Manager Processes (PMP) in a distributed data processing system of the type incorporating the present invention.

FIG. 9 shows a distributed data processing system illustrating how user processes a and b are notified when a resource process x has been created or terminated.

FIG. 10 shows a distributed data processing system illustrating how Process Manager Processes are notified when a Process Creation Trap is resolved at a remote node.

FIG. 11 illustrates how the present invention may be used in an error management module in a distributed data processing system in which each system node has an Event Log Service Process (ELSP).

FIG. 12A shows a flowchart illustrating an operation to Set a Process Creation Trap.

FIG. 12B shows a flowchart illustrating an operation to Set a Process Termination Trap.

FIG. 12C shows a flowchart illustrating an operation to Resolve a Process Termination Trap.

FIG. 12D shows a flowchart illustrating an operation to Resolve a Process Creation Trap.

FIG. 12E shows a flowchart illustrating an operation to handle a Creation Trap Resolution From Other Nodes.

FIG. 12F shows a flowchart illustrating an operation to Cancel a Process Creation Trap.

FIG. 12G shows a flowchart illustrating an operation to Check If a Creation Trap is Set.

FIG. 12H shows a flowchart illustrating an operation to Cancel a Process Termination Trap.

### OVERVIEW OF COMPUTER SYSTEM

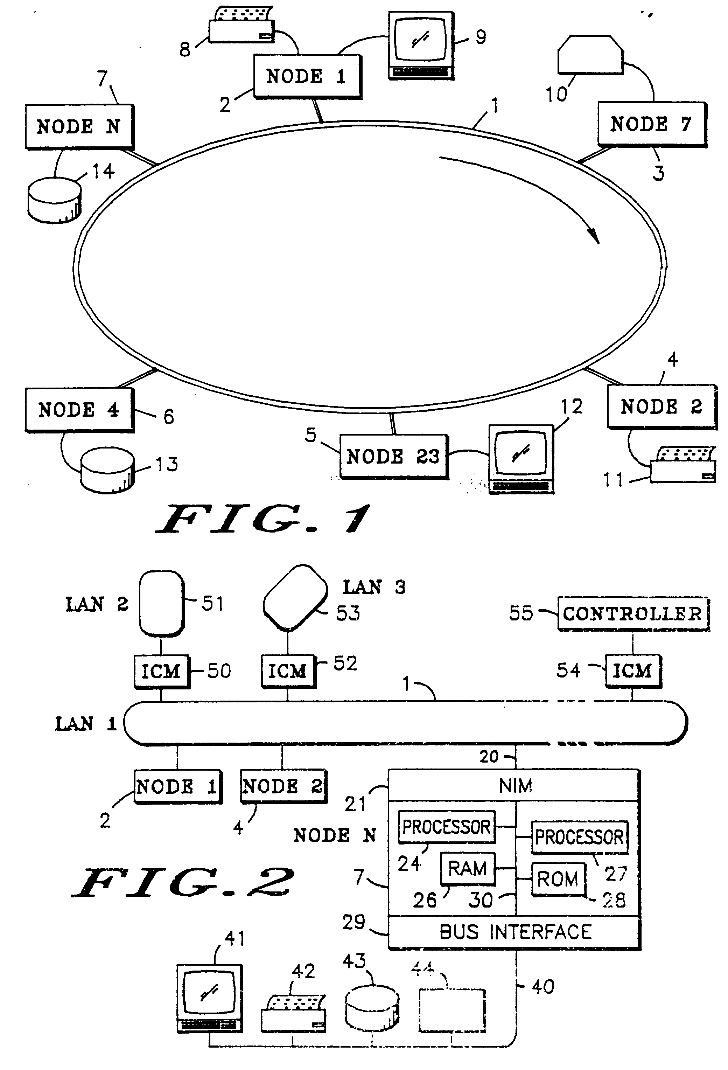

With reference to FIG. 1, a distributed computer configuration is shown comprising multiple nodes 2-7 (nodes) loosely coupled by a local area network (LAN) 1. The number of nodes which may be connected to the network is arbitrary and depends upon the user application. Each node comprises at least a processor and memory, as will be discussed in greater detail with reference to FIG. 2 below. In addition, each node may also include other units, such as a printer 8, operator display module (ODM) 9, mass memory module 13, and other I/O device 10.

With reference now to FIG. 2, a multiple-network distributed computer configuration is shown. A first local area network LAN 1 comprises several nodes 2,4, and 7. LAN 1 is coupled to a second local area network LAN 2 by means of an Intelligent Communications Module (ICM) 50. The Intelligent Communications Module provides a link between the LAN and other networks and/or remote processors (such as programmable controllers).

LAN 2 may comprise several nodes (not shown) and may operate under the same LAN protocol as that of the present invention, or it may operate under any of several commercially available protocols, such as Ethernet; MAP, the Manufacturing Automation Protocol of General Motors Corp.; Systems Network Architecture (SNA) of International Business Machines, Inc.; SECS-II; etc. Each ICM 50 is programmable for carrying out one of the above-mentioned specific protocols. In addition, the basic processing module of the node itself can be used as an intelligent peripheral controller (IPC) for specialized devices.

LAN 1 is additionally coupled to a third local area network LAN 3 via ICM 52. A process controller 55 is also coupled to LAN 1 via ICM 54.

A representative node N (7, FIG. 2) comprises a processor 24 which, in a preferred embodiment, is a processor from the Motorola 68000 family of processors. Each node further includes a read only memory (ROM) 28 and a random access memory (RAM) 26. In addition, each node includes a Network Interface Module (NIM) 21, which connects the node to the LAN, and a Bus Interface 29, which couples the node to additional devices within a node.

While a minimal node is capable of supporting two peripheral devices, such an an Operator Display Module (ODM) 41 and an I/O Module 44, additional devices (including additional processors, such as processor 27) can be provided within a node. Other additional devices may comprise, for example, a printer 42, and a mass-storage module 43 which supports a hard disk and a back-up device (floppy disk or streaming tape drive).

The Operator Display Module 41 provides a keyboard and screen to enable an operator to input information and receive visual information.

While a single node may comprise all of the above units, in the typical user application individual nodes will normally be dedicated to specialized functions. For example, one or more mass storage nodes may be set up to function as data base servers. There may also be several operator consoles and at least one node for generating hard-copy printed output. Either these same nodes, or separate dedicated nodes, may execute particular application programs.

The system is particularly designed to provide an integrated solution for factory automation, data acquisition, and other real-time applications. As such, it includes a full complement of services, such as a graphical output, windows, menus, icons, dynamic displays, electronic mail, event recording, and file management. Software development features include compilers, a window-oriented editor, a debugger, and performance-monitoring tools.

### Local Area Network

The local area network, as depicted in either FIG.1 or FIG. 2, ties the entire system together and makes possible the distributed virtual machine model described below. The LAN provides high throughput, guaranteed response, reliability, and low entry cost. The LAN is also autonomous, in the sense that all system and applications software is unaware of its existence. For example, any Network Interface Module (e.g. NIM 21, FIG. 2) could be replaced without rewriting and software other than that which directly drives it.

The LAN interconnection medium may be twisted-pair or coaxial cable. Two channels (logically, two distinct networks) may be provided for reliability and for increased throughput.

The LAN architecture is a logical ring, in which an electronic "token" is constantly passed from node to node at high speed. The current holder of the token may use it to send a "frame" of data or may pass it on to the next node in the ring. The NIM only needs to know the logical address and status of its immediately succeeding neighbor. The NIM's responsibility is limited to detecting the failure of that neighbor or the inclusion of a new neighbor. In general, adjustment to failed or newly added nodes is automatic.

The network interface maps directly into the processor's memory. Data exchange occurs through a dual-ported buffer pool which contains a linked list of pending "frames". Logical messages, which vary in length, are broken into fixed-size frames for transmission and are re-assembled by the receiving NIM. Frames are sequence-numbered for this purpose. If a frame is not acknowledged within a short period of time, it is retransmitted a number of times before being treated as a failure.

As described above with reference to FIG. 2, the LAN may be connected to other LAN's operating under the same LAN protocol via so-called "bridgeways", or it may be connected to other types of LAN's via "gateways".

### Software Model

The computer operating system of the present invention operates upon processes, messages, and contexts, as such terms are defined herein. Thus this operating system offers the programmer a hardware abstraction, rather than a data or control abstraction.

Processes are referenced without regard to their physical location via a small set of message-passing primitives. As mentioned earlier, every process has both a unique system-generated identifier and a not necessarily unique name assigned by the programmer. The identifier provides quick direct access, while the name has a limited scope and provides symbolic, indirect access.

With reference to FIG. 3, an architectural model of the present invention is shown. The bottom, or hardware, layer 63 comprises a number of processors 71-76, as described above. The processors 71-76 may exist physically within one or more nodes. The top, or software, layer 60 illustrates a number of processes P1-P10 which send messages *m*1-*m*6 to each other. The middle layer 61, labelled "virtual machine", isolates the hardware from the software, and it allows programs to be written as if they were going to be executed on a single processor. Conversely, programs can be distributed across multiple processors without having been explicitly designed for that purpose.

### The Virtual Machine

As discussed earlier, a "process" is a self-contained package of data and executable procedures which operate on that data. The data is totally private and cannot be accessed by other processes. There is no concept of shared memory within the present invention. Execution of a process is strictly sequential. Multiple processes execute concurrently and must be scheduled by the operating system. The processes can be re-entrant, in which case only one copy of the code is loaded even if multiple instances are active.

Every process has a unique "process identifier number" (PID) by which it can be referenced. The PID is assigned by the system when the process is created and remains in effect until the process terminates. The PID assignment contains a randomizing factor which guarantees that the PID will not be re-used in the near future. The contents of the PID are irrelevant to the programmer but are used by the virtual machine to physically locate the process. A PID may be thought of as a "pointer" to a process.

Every process also has a "name" which is a variable-length string of characters assigned by the programmer. A name need not be unique, and this ambiguity may be used to add new services transparently and to aid in fault-tolerance.

FIG. 4 illustrates that the system-wide name space is partitioned into distinct subsets by means of "contexts" identified by reference numerals 90-92. A context is simply a collection of related processes whose names are not known outside of the context. Context 90, for example, contains processes A, a, a, b, c, d, and e. Context 91 contains processes B, a, b, c, and f. And context 92 contains processes C, a, c, d, and x.

One particular process in each context, called the "context process", is known both within the context and within the immediately enclosing one (referred to as its "parent context"). In the example illustrated in FIG. 4, processes A-C are context processes for contexts 90-92, respectively. The parent context of context 91 is context 90, and the parent context of context 92 is context 91. Conceptually, the context process is located on the boundary of the context and acts as a gate into it.

Processes inside context 92 can reference any processes inside contexts 90 and 91 by name. However, processes in context 91 can only access processes in context 92 by going through the context process C. Processes in context 90 can only access processes in context 92 by going through context processes B and C.

The function of the context process is to filter incoming messages and either reject them or reroute them to other processes in its context. Contexts may be nested, allowing a hierarchy of abstractions to be constructed. A context must reside completely on one node. The entire system is treated as an all-encompassing context which is always present and which is the highest level in the hierarchy. In essence, contexts define localized protection domains and greatly reduce the chances of unintentional naming conflicts.

If appropriate, a process inside one context can be "connected" to one inside another context by exchanging PID's, once contact has been established through one or the other of the context processes. Most process servers within the present invention function that way. Initial access is by name. Once the desired function (such as a window or file) is "opened", the user process and the service communicate directly via PID's.

A "message" is a variable-length buffer (limited only by the processor's physical memory size) which carries information between processes. A header, inaccessible to the programmer, contains the destination name and the sender's PID. By convention, the first field in a message is a null-terminated string which defines the type of message (e.g., "read", "status", etc.). Messages are queued to the receiving process when they are sent. Queuing ensures serial access and is used in preference to semaphores, monitors, etc.

Messages provide the mechanism by which hardware transparency is achieved. A process located anywhere in the virtual machine can send a message to any other process if it knows its name. Transparency applies with some restrictions across bridgeways (i.e., the interfaces between LAN's operating under identical network protocols) and, in general, not at all across gateways (i.e., the interfaces between LAN's operating under different network protocols) due to performance degradation. However, they could so operate, depending upon the required level of performance.

### Inter-Process Communication

All inter-process communication is via messages. Consequently, most of the virtual machine primitives are concerned with processing messages. The virtual machine kernel primitives are the following:
- *ALLOC* -: requests allocation of a (message) buffer of a given size.
- *FREE* -: requests deallocation of a given message buffer.
- *PUT* -: send a message to a given destination (by name or PID).
- *GET* -: wait for and dequeue the next incoming message, optionally from a specific process (by PID).
- *FORWARD* -: pass a received message through to another process.
- *CALL* -: send a message, then wait for and dequeue the reply.
- *REPLY* -: send a message to the originator of a given message.
- *ANY*_*MSG* -: returns "true" if the receive queue is not empty, else returns "false"; optionally, checks if any messages from a specific PID are queued.

To further describe the function of the kernel primitives, *ALLOC* handles all memory allocations. It returns a pointer to a buffer which can be used for local storage within the process or which can be sent to another process (via *PUT*, etc.). *ALLOC* never "fails", but rather waits until enough memory is freed to satisfy the request.

The *PUT* primitive queues a message to another process. The sending process resumes execution as soon as the message is queued.

*FORWARD* is used to quickly reroute a message but maintain information about the original sender (whereas *PUT* always makes the sending process the originator of the message).

*REPLY* sends a message to the originator of a previously received message, rather than by name or PID.

*CALL* essentially implements remote subroutine invocations, causing the caller to suspend until the receiver executes a *REPLY*. Subsequently, the replied message is dequeued out of sequence, immediately upon arrival, and the caller resumes execution.

The emphasis is on concurrency, so that as many processes as possible are executed in parallel. Hence neither *PUT* nor *FORWARD* waits for the message to be delivered. Conversely, *GET* suspends a process until a message arrives and dequeues it in one operation. The *ANY*_*MSG* primitive is provided so that a process may determine whether there is anything of interest in the queue before committing itself to a *GET*.

When a message is sent by name, the destination process must be found in the name space. The search path is determined by the nesting of the contexts in which the sending process resides. From a given process, a message can be sent to all processes in its own context or (optionally) to those in any higher context. Refer to FIG. 5. The contexts are searched from the current one upward until a match is found or until the system context is reached. All processes with the same name in that context are then queued a copy of the message.

For example, with reference to FIG. 5, assume that in context 141 process y sends a message to ALL processes by the name x. Process y first searches within its own context 141 but finds no process x. The process y searches within the next higher context 131 (its parent context) but again finds no process x. Then process y searches within the next higher context 110 and finds a process x, identified by reference numeral 112. Since it is the only process x in context 110, it is the only recipient of the message from process y.

If process a in context 131 sends a message to *ALL* processes by the name x, it first searches within its own context 131 and, finding no processes x there, it then searches within context 110 and finds process x.

Assume that process b in context 131 sends a message to *ALL* processes by the name A. It would find process A (111) in context 110, as well as process A (122) which is the context process for context 121.

A process may also send a message to itself or to its context process without knowing either name explicitly.

The concept of a "logical ring" (analogous to a LAN) allows a message to be sent to the *NEXT* process in the system with a given name. The message goes to exactly one process in the sender's context, if such a process exists. Otherwise the parent context is searched.

The virtual machine guarantees that each *NEXT* transmission will reach a different process and that eventually a transmission will be sent to the logically "first" process (the one that sent the original message) in the ring, completing the loop. In other words, all processes with the same name at the same level can communicate with each other without knowing how many there are or where they are located. The logical ring is essential for distributing services such as a data base. The ordering of processes in the ring is not predictable.

For example, if process a (125) in context 121 sends a message to process a using the *NEXT* primitive, the search finds a first process a (124) in the same context 121. Process a (124) is marked as having received the message, and then process a (124) sends the message on to the *NEXT* process a (123) in context 121. Process a (123) is marked as having received the message, and then it sends the message on to the *NEXT* process a, which is the original sender process a (125), which knows not to send it further on, since it's been marked as having already received the message.

Sending messages directly by PID obviates the need for a name search and ignores context boundaries. This is known as the *DIRECT* mode of transmission and is the most efficient. For example, process A (111) sends a message in the *DIRECT* mode to process y in context 141.

If a process sends a message in the *LOCAL* transmission mode, it sends it only to a process having the given name in the sender's own context.

In summary, including the *DIRECT* transmission mode, there are five transmission modes which can be used with the *PUT*, *FORWARD*, and *CALL* primitives:
- *ALL* -: to all processes with the given name in the first context which contains that name, starting with the sender's context and searching upwards through all parent contexts
- *LOCAL* -: to all processes with the given name in the sender's context only.
- *NEXT* -: to the next process with the given name in the same context as the sender, if any; otherwise it searches upwards through all parent contexts until the name is found.
- *LEVEL* -: sends to "self" (the sending process) or to "context" (the context process corresponding to the sender's context); "self" cannot be used with CALL primitive.
- *DIRECT* -: sent by PID.

Messages are usually transmitted by queueing a pointer to the buffer containing the message. A message is only copied when there are multiple destinations or when the destination is on another node.

### Operating System

The operating system of the present invention consists of a kernel, which implements the primitives described above, plus a set of processes which provide process creation and termination, time management (set time, set alarm, etc.) and which perform node start-up and configuration. Drivers for devices are also implemented as processes (EESP's), as described above. This allows both system services and device drivers to be added or replaced easily. The operating system also supports swapping and paging, although both are invisible to applications software.

Unlike known distributed computer systems, that used in the present invention does not use a distinct "name server" process to resolve names. Name searching is confined to the kernel, which has the advantage of being much faster.

A minimal bootstrap program resides permanently (in ROM) on every node, e.g. ROM 28 in node N of FIG. 2. The bootstrap program executes automatically when a node is powered up and begins by performing basic on-board diagnostics. It then attempts to find and start an initial system code module. The module is sought on the first disk drive on the node, if any. If there isn't a disk, and the node is on the LAN, a message will be sent out requesting the module. Failing that, the required software must be resident in ROM. The initialization program of the kernel sets up all of the kernel's internal tables and then calls a predefined entry point of the process.

In general, there exists a template file describing the initial software and hardware for each node in the system. The template defines a set of initial processes (usually one per service) which are scheduled immediately after the node start-up. These processes then start up their respective subsystems. A node configuration service on each node sends configuration messages to each subsystem when it is being initialized, informing it of the devices it owns. Thereafter, similar messages are sent whenever a new device is added to the node or a device fails or is removed from the node.

Thus there is no well-defined meaning for "system up" or "system down" - as long as any node is active, the system as a whole may be considered to be "up". Nodes can be shut down or started up dynamically without affecting other nodes on the network. The same principle applies, in a limited sense, to peripherals. Devices which can identify themselves with regard to type, model number, etc. can be added or removed without operator intervention.

### Standard Message Format

FIG. 7 illustrates the standard format of a message in the distributed data processing system of the type described herein. The message format comprises a message i.d. portion 288, one or more "triples" 289 and 290, and an end-of-message portion 292. Each "triple" comprises a group of three fields, such as fields 293-295. The first field 293 of the first triple 289 specifies that a Process Creation Trap (CRTR) has to be set.

In the second triple 290 the first field 296 specifies that the data field represents the name of the process to be acted upon, such as the process whose creation is to be trapped. The second field 297 gives the size of the data field. The third field 298 is the data field. A message can have any number of "triples".

As presently implemented, portion 288 is 16 bytes in length, field 296 is 4 bytes, field 297 is 4 bytes, field 298 is variable in length, and EOM portion 160 is 4 bytes.

As shown in FIG. 7, the message i.d. portion 288 describes a "SET" command, and field 298 names a process. When the message is sent by the requesting process to a Process Manager Process, message portion 291 is empty, but when the message is returned to the requesting process by the PMP, message portion 290 will contain the process "connector". The process connector identifies the designated process by processor identification number (PID) and its process channel, and it forms the link between the designated process and the requesting process. Processor connectors are described in greater detail in Invention No. 11 identified above.

### Resource/Connector Model

The distributed system of the present invention may be viewed at several levels of complexity. The base level is the virtual machine, which defines and implements the device-independent architecture, consisting of virtual "instructions", i.e. the kernel primitives.

Layered immediately above this, and closely related to it, is the process/message model which defines how programs are configured in the system and how they communicate with each other.

Just above this level is a more abstract model dealing with "resources" and "connectors". As mentioned earlier, resources may be thought of as "logical devices". Resources are accessed through "connectors", which are essentially logical "pointers".

An application must have a connector to a resource in order to interact with it. Connectors are granted and controlled by "resource manager processes", i.e. processes which can be requested to create, delete, etc. resources.

Resource manager processes respond to connector messages to "create" new resources and "delete" old ones, and to "open" an existing resource (i.e. ask for a connection to it) and later to "close" it (terminate the connection to it).

The response to creating a resource, or opening a connection to it, is a connect message. This message contains a service-independent connector data structure which uniquely identifies the resource.

An application may create a new resource, or acquire access to an existing one, by making a request to the appropriate resource manager process. (Note that all resources remain controlled and protected by the resource manager process, and they are kept in its context.) As a result, a connector to the resource is returned to the application, allowing it to communicate directly with the resource. Note that in general two connectors are required - one for the resource manager process, and one for the resource (although in many cases the resource manager process can be accessed by name).

When a connector is received in a message, it identifies a specific resource to which the receiving process has access. The entire connector must be copied into subsequent request messages to the resource. The messages themselves are usually sent in "direct" mode, passing the address of the connector. As mentioned above, messages to the resource's manager can be sent by name, if appropriate, or via an explicit connector (to the manager), if available.

Both "create" and "open" requests to the resource manager process usually expect a process name as a parameter, and both return a connection message. A "create" request without a name causes the service to generate a unique name. An "open" request using a connector instead of a name may be employed to access the resource differently or to gain access to a closely related resource. The "delete" and "close" requests may accept either an explicit connector to the resource or the resource's name.

There are five formats for connection messages: "create", which requests the creation of a new resource; "open", which establishes a connection to an existing resource; "delete", which requests that a specified resource be removed from the system; "close", which requests that the connection to a resource be terminated; and "connect", which provides a connection to a resource. The "connect" message normally represents a response to a "create" or "open" request and is not generally sent unsolicited.

Data exchange messages are another type of message used in the distributed system of the present invention. Data in any format is sent solely by means of the "write" message. Data is requested by the "read" message to which "write" or "failed" are the only responses.

Process which only generate data should respond with "failed" to "write" requests. Conversely, a write-only resource should return "no data" (i.e. a "write" message without a data "triple") if it receives a "read" request.

There are two formats for data exchange messages: "write", which is used to send data; and "read", which is used to request data. A "write" message includes the source of the data, the destination resource, the originator of the data, the type of data (if known), and it contains a block of data. A "read" message includes the destination resource, an optional prompt string (which must be written exactly before any data is read), and a protect parameter which indicates that the input should be protected if possible.

Appropriate status messages are used to convey the completion status of a request, or the current state of a service or resource. In the latter case, the status message may be requested explicitly or may be sent as the result of an synchronous event within the resource itself.

There are four formats for status messages: "query", which asks for the current status of a resource; "done", which indicates that a previous request has successfully completed; "failed", which indicates that a previous request has not completed; and "status", which gives the status of a resource, either in response to "query" or as the result of an asynchronous condition.

### DETAILED DESCRIPTION OF THE INVENTION

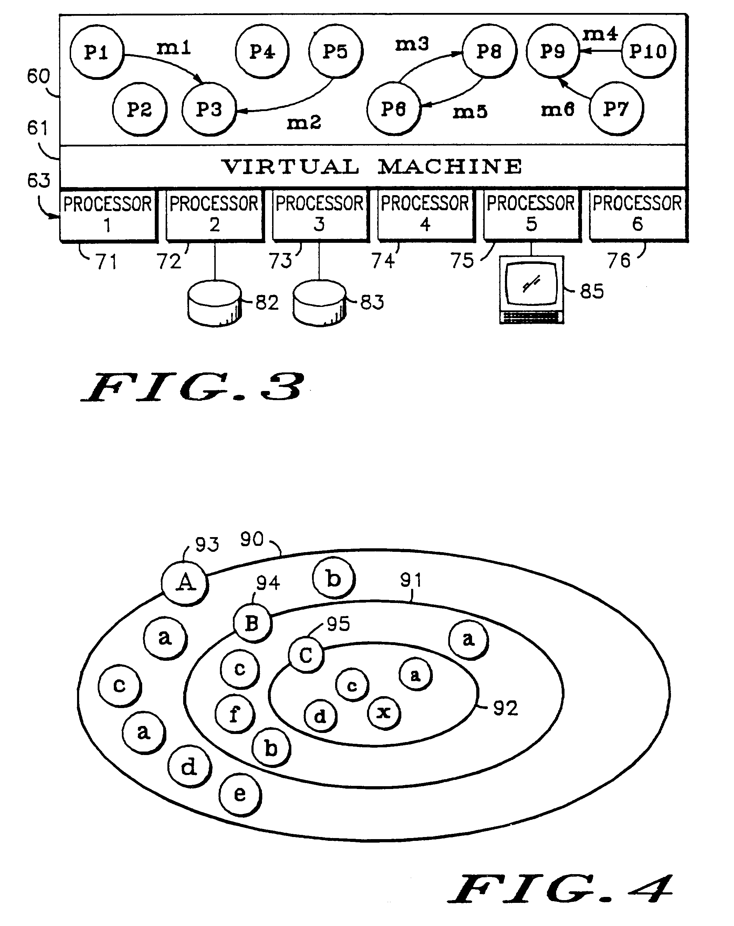

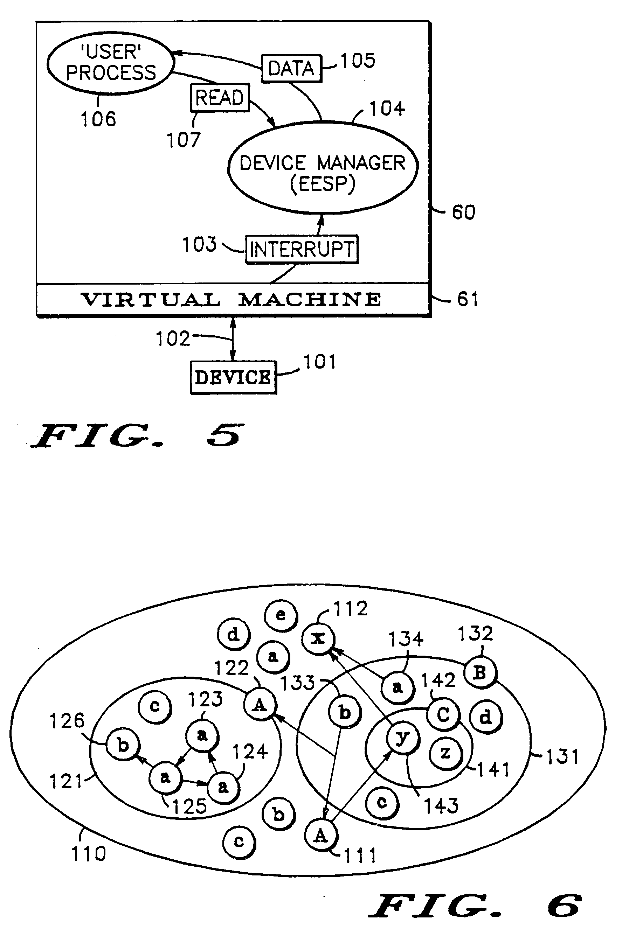

FIG. 8 shows how Process Creation Trap (PCT) messages and Process Termination Trap (PTT) messages are sent between Process Manager Processes (PMP) in a distributed data processing system of the type incorporating the present invention. A Process Manager Process exists at the most basic level of the operating system, i.e. the kernel. It is the only process which can create and terminate processes. There is exactly one Process Manager Process in every node of the system, such as nodes 152-154 shown in FIG. 8.

Any process, such as process "y" on node 152, can send a Process Creation Trap (PCT) request message or a Process Termination Trap (PTT) request message to the Process Manager Process (PMP) residing on its own node. If the trap request refers to processes to be created or terminated on other nodes, the PMP of the host node forwards or broadcasts the request to the PMP of another or all other nodes.

The request for notification can be made specific to one node, several nodes, or the entire system. On the other hand, it may be limited to one context. The requesting process can be located anywhere in the system.

A trap request is not forwarded or broadcasted to any other node if the requesting process explicitly restricts the scope of the request to the local node; if it restricts the scope of the request to a context of processes local to the host node; or if the request explicitly identifies a process to be trapped that exists on the local node. For example, the PTT request "ml" to trap process "x" existing on the same node is kept by the PMP of the host node 152.

A trap request is forwarded to another node if the requesting process explicitly restricts the scope of the request to that of another node; if it restricts the scope of the request to a context of processes local to that other node; or if the request explicitly identifies a process to be trapped that exists on that other node. For example, the PCT request "m2" to trap creation of processes in the context of the "z" process existing on node 153 is forwarded to the PMP of that node, and it is not kept on the local node.

A trap request is broadcasted to all nodes if the requesting process does not restrict the scope of the request and it does not identify any specific existing process or if it restricts the scope of the request to a context of processes that spans all nodes of the network. A trap request broadcasted to all nodes is also stored on the host node. For example, the PCT request "m3" to trap creation of processes with the name of "foo" regardless of its location in the network is broadcasted to both nodes 153 and 154 in addition to keeping it on the node 152 as well.

The Process Creation Trap or Process Termination Trap request specifies that a receiving Process Manager Process notify the requesting process y whenever a designated process is created or terminated on nodes 152, 153, or 154.

When a process is created with the name designated in the Process Creation Trap, the Process Manager Process that received the Creation Trap Request then replies to the process or processes which requested that the Process Creation Trap be set, and the trap is released. This is referred to as the "resolution" of a Process Creation Trap.

Likewise when a process is terminated which was identified in the Process Termination Trap, the Process Manager Process responsible for terminating such process then replies to the process or processes which requested that the Process Termination Trap be set, and the trap is released. This is referred to as the "resolution" of a Process Termination Trap.

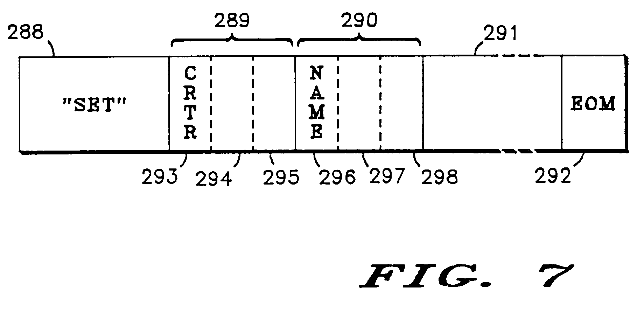

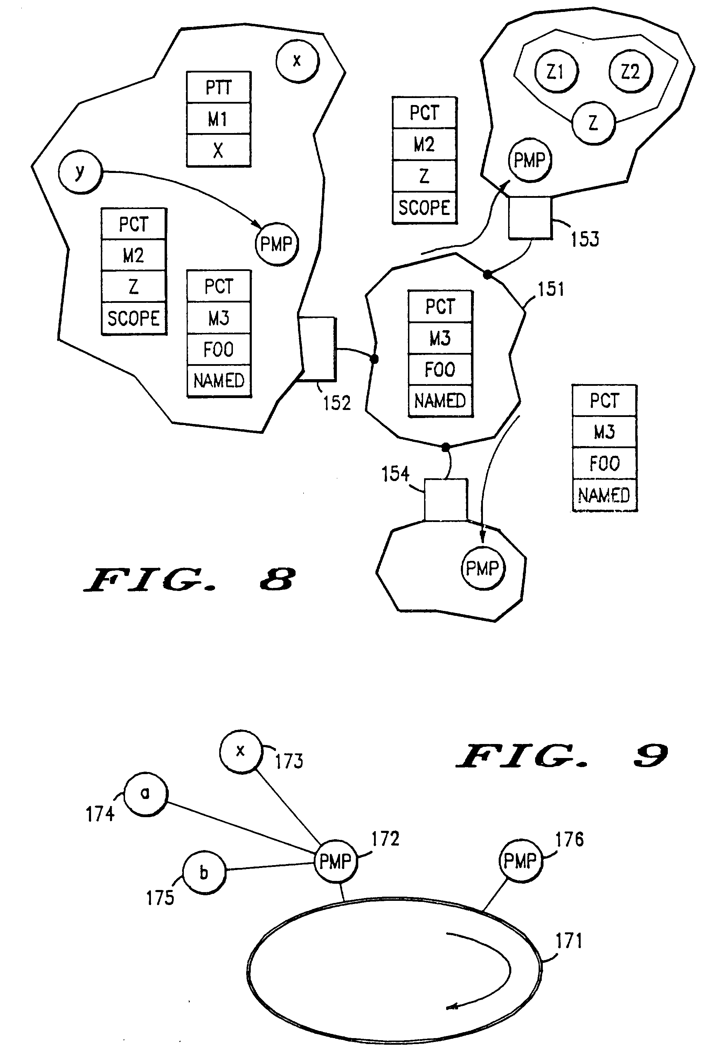

FIG. 9 shows a distributed data processing system comprising network 171 with nodes 172 and 173, each having a Process Manager Process (PMP). At node 172 user processes a and b both desire to be informed if and when a process x is created, so they send Process Creation Trap request messages to the Process Manager Process on node 172. If process x is subsequently created, by whatever process in the system for whatever reason, the Process Manager Process on node 172 notifies both processes a and b of the fact.

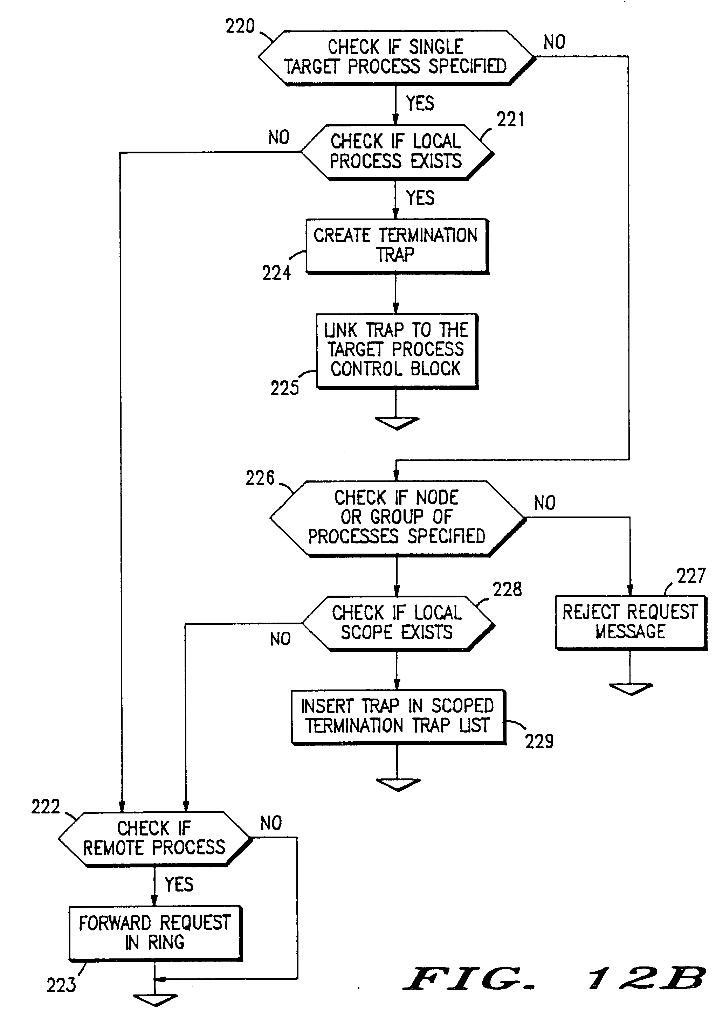

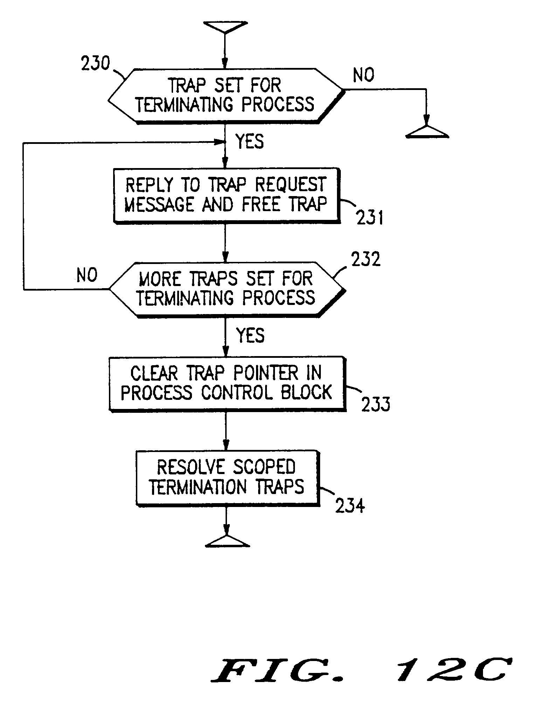

It is useful for user processes to know where to find various serving processes which have been created, e.g. a fast Fourier analysis process, Event Log Service Process (see FIG.11), etc.

With respect to other features of the invention, various other actions may be specified regarding the setting or resolution of Process Creation Traps or Process Termination Traps, or regarding trapped processes. For example, Process Creation Trap requests may be made conditional upon the current existence of processes with the designated name. Also, process trap requests may specify that resolved traps are to be automatically reinstated. In this case a replied trap is not released.

In addition, a Process Creation Trap request may specify that trapped processes are to be suspended until such suspension is released. Also the requesting process may request the removal of process traps which have been unresolved within some period of time, or it may request such removal unconditionally. Further, the requesting process may request that information regarding the created/terminated process in addition to its name should be returned to the requesting process upon resolution of the process trap.

A Process Creation Trap may or may not specify the name of the process whose creation has to be trapped. If the process name is not specified, any process created in the specified scope is trapped.

If the scope of a Process Creation Trap request is the entire network, such as network 151, then the Process Manager Process of the requesting node (e.g. node 152) broadcasts the trap request to the Process Manager Processes of all nodes 152-154 of the network. When the Process Creation Trap is resolved by the Process Manager Process of a node, and trap removal upon resolution is requested, the trap resololution is reported to the Process Manager Processes of all nodes. A remotely resolved Process Creation Trap is always replied through the Process Manager Process of the requesting node in order to eliminate race conditions which could occur in the case of simultaneous trap resolutions.

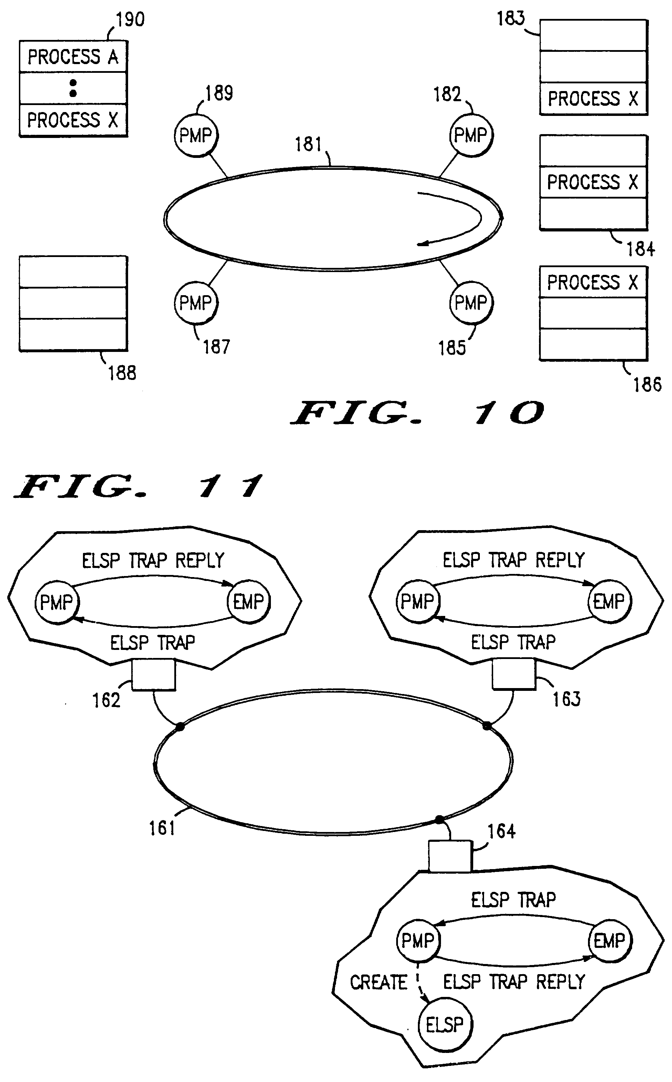

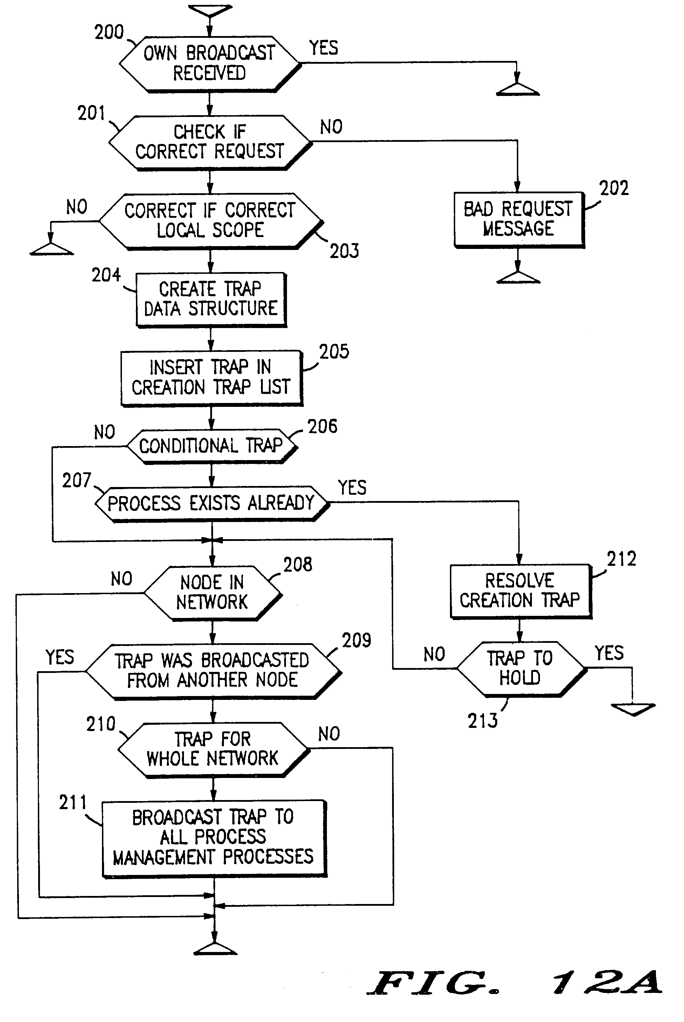

FIG. 10 shows a distributed data processing system illustrating how Process Manager Processes are notified when a Process Creation Trap is resolved on a remote node. A network 181 comprises nodes 182, 185, 187, and 189, each having a Process Manager Process (PMP). Each node also has an associated list of traps 183, 186, 188, and 190. Any time such node receives a PCT with a process name, it adds to its list of traps the name of the process whose creation is to be reported.

Assume that a process located at node 187 broadcasts a Process Creation Trap request for a process x. Each of the nodes then adds process x to its associated list of traps. Assume too that process x is subsequently created at node 182. Then the Process Manager Process at node 182 will delete process x from its list of traps and add process x to its list of processes 184. The PMP of node 182 next notifies the PMP of node 187 that process x was created. Then the PMP of node 187 notifies the other PMP's of the network (i.e. on nodes 185 and 189) that process x was created.

If the process specified in a Process Termination Trap cannot be located on the requesting node, the request is forwarded to the Process Manager Process of the next node. It is forwarded in the ring of Process Manager Processes until the process is found. A resolved Process Termination Trap is always directly replied from the node of resolution to the process requesting the Process Termination Trap regardless of its location in the network.

The present invention has significant utility in several respects, particularly in the distributed, process/message system herein-disclosed. Numerous modules of the operating system rely upon notification of process creations and terminations - for example, configuration management, error management, debug services, performance monitors, process directory, and system statistics reporters.

Process creation and termination trap messages provide a facility to link to the Process Management from these modules at run-time. The process trap messages also reduce the dependency of these modules on the process description representation details.

In a conventional operating system, resources (e.g. files) allocated by processes are recorded in the process description data structures. The release of resources allocated by terminating processes have to be explicitly initiated by a process termination algorithm. Therefore, changes in the configuration of the system-wide supported resource types have to be reflected in the process description data structures and in the process termination algorithm.

In the present invention, by requesting a Process Termination Trap at each resource allocation for a process, the resource managers are notified when the allocating process terminates, and the resource release can be initiated by the resource manager itself. Adding new types of resource managers to the system does not change the process description data structure or the process termination algorithhm.

For example, if a process is terminated because of a fault or because it is completed, normally it is important to release all resources which have been allocated to such process.

Also in a multiprocess system, various functions can be invoked upon the creation of a process. Process Creation Traps provide a simple, efficient, and configurable way of passing control between functions and of synchronizing functions.

FIG. 11 shows how the present invention may be used to facilitate error management in a distributed data processing system. In network 161 each node 162-164 may have one or more resources associated with it (not shown). For an Error Management Process (EMP) it is desirable to access an Event Log Service Process (ELSP) on any node for the purpose of logging various events associated with such nodal resources. When an ELSP is first created, for example on node 154, one or more error management processes in the network may be notified, so that such error management processes are made aware of the location of the ELSP in the system, so that the ELSP can be polled, given commands, etc.

Otherwise, if no ELSP is accessible, the error management processes have to use lower level system services to log events in simpler form; these are available on every node.

### DESCRIPTION OF PROGRAM

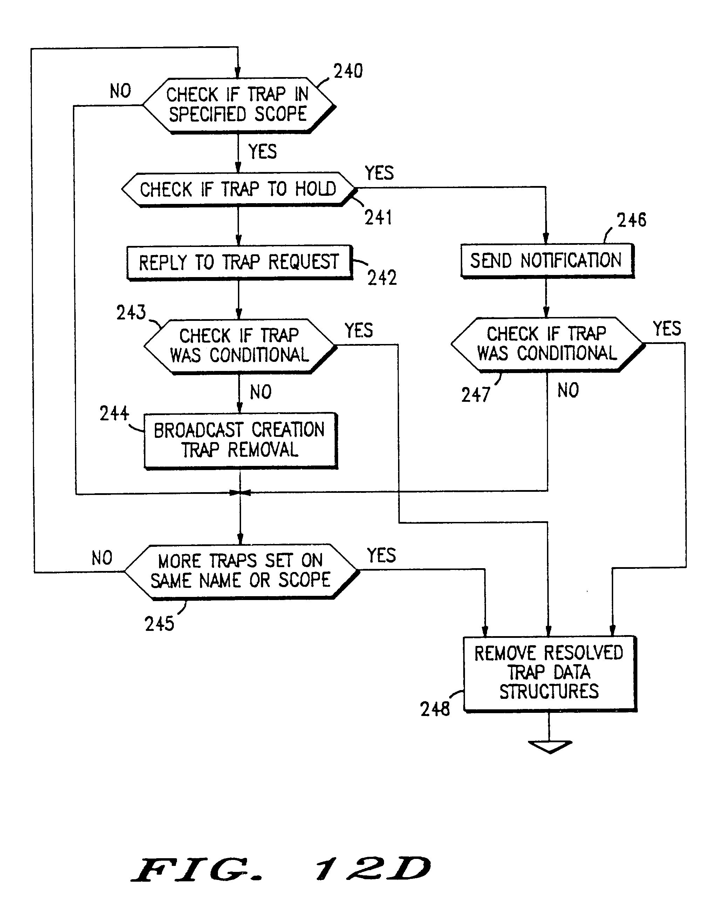

An embodiment of the invention consists of a "C" language implementation of the concepts relating to the process traps as described hereinabove. These concepts are represented in flowchart form by FIGS. 12A-12H for the convenience of the reader.

FIG. 12A shows a flowchart illustrating an operation by a Process Manager Process (PMP) to Set a Process Creation Trap. In decision block 200 if the PMP is receiving its own broadcast the routine is terminated; but if not it proceeds to decision block 201. In decision block 201 if the trap request is correct, the routine proceeds to block 203; if not, the routine passes to block 202 to generate a bad request notification.

In decision block 203 the request is checked if it has a correct scope local to the node; if yes, a creation trap data structure is allocated and initialized in block 204; otherwise the request is either forwarded to other nodes or it is rejected.

In block 205 the new trap data structure is inserted either in the list of unresolved creation traps for a given process name that are organized in a hash table, or it is inserted in the list of unnamed process creation traps that are linked according to the scope of the trap.

Next in decision block 206 if this is a conditional trap, the routine passes to decision block 207; if not it proceeds to decision block 208.. In decision block 207 if the process already exists the routine passes to block 212 where the creation trap is resolved; if not it proceeds to decision block 208.

In decision block 213, if the resolved conditional trap is to be held, the trap may get broadcasted to other nodes; else the routine terminates.

In decision block 208 if there is no node in the network the routine terminates; otherwise it proceeds to decision block 209. In decision block 209 if the trap was broadcasted from another node the routine terminates; otherwise it proceeds to decision block 210. In decision block 210 if this trap is not restricted to the local node, the routine passes to block 211, where the trap is broadcasted to all PMP's in the network; otherwise the routine terminates.

FIG. 12B shows a flowchart illustrating an operation to Set a Process Termination Trap. In decision block 220, it checks whether a single process is trapped; if yes, it proceeds to check in block 221 whether this is a process existing on the local node. If not, in decision block 222 it checks whether the request refers to a remote process; if yes, in block 223 the request is forwarded to the next node in the ring; else the routine terminates rejecting the request.

If the local process exists, in block 224 the termination trap data structure is created; then in block 225 it is linked to the Process Control Block of the specified process.

If the request did not specify a single process, in decision block 226 the specification of a node or a group of processes is checked; if these are not specified either, the request is rejected in block 227.

Otherwise, in decision block 228 the existence of the scope on the local node is checked; if it exists, the termination trap is inserted in the list of scoped termination traps for this node in block 229; else a remote target scope is searched starting from decision block 222 similarly to the single process termination trap requests.

FIG. 12C shows a flowchart illustrating an operation to Resolve a Process Termination Trap. In decision block 230 if the trap is not set for the terminating process, the routine terminates; otherwise it passes to block 231, where a reply is made to the trap request message and the trap is freed. After block 231 the routine passes to decision block 232. In decision block 232 if no more traps are set for the terminating process, the routine passes to block 233, where the trap pointer is cleared in the Process Control Block; if not the routine returns to block 231.

After all possible termination traps on this one specified process have been resolved, in block 234 a similar algorithm resolves all scoped traps where the terminating process falls in the specified scope.

FIG. 12D shows a flowchart illustrating an operation to Resolve a Process Creation Trap. In decision block 240, if the created process is in the scope of the located trap, it proceeds to block 241 to check if the trap is to be held; otherwise it proceeds to block 245 to check whether there are more traps to check for the same process name of scope.

If the trap should not be held, it is replied in block 242; else only a notification is sent to the requesting process in block 246. In both cases it is checked whether the trap was conditional in blocks 243 and 247; if yes, the data structure of the resolved trap is removed.

If the trap was not conditional and it did not have to be held, a creation trap removal request is broadcasted to all nodes of the network in block 244.

If no more traps are set on the same process name and on an encompassine scope, the resolved data structures are removed in block 248; else the next trap in the list is checked in decision block 240.

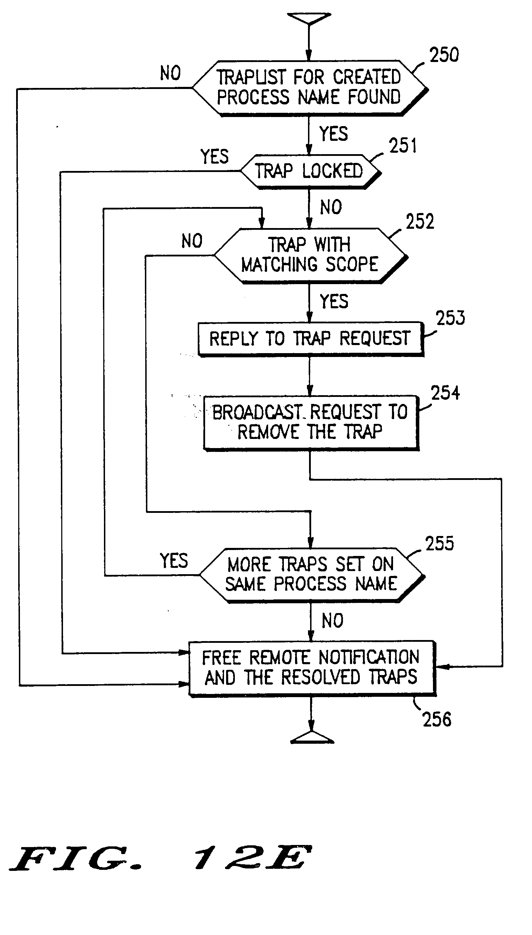

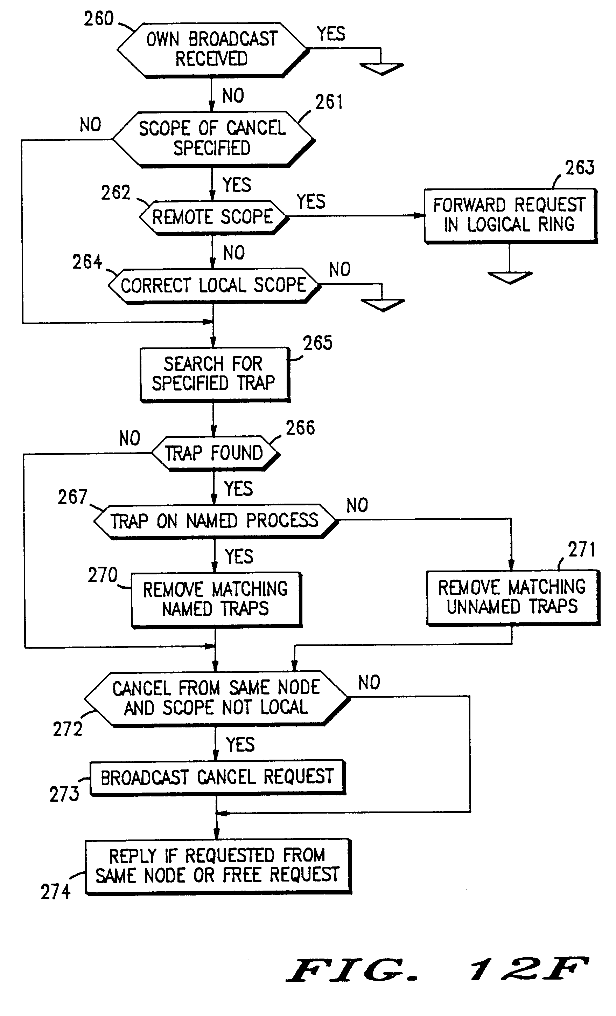

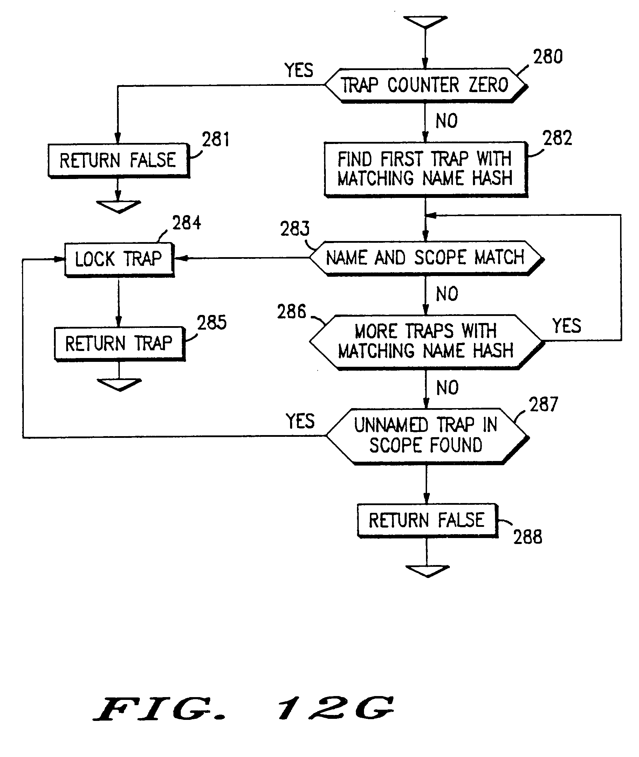

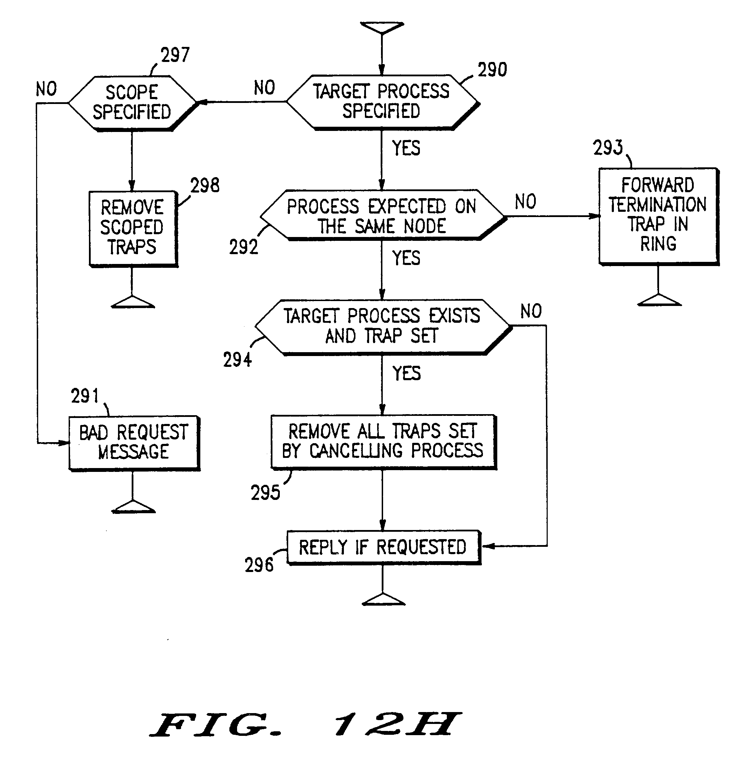

FIG. 12E shows a flowchart illustrating an operation to handle a Creation Trap Resolution From Other Nodes. In decision block 250 if the traplist is found for the created process name, the routine passes to decision block 251; if not it proceeds to block 256, where the remote notification is freed.

In decision block 251 if the trap is locked, then the routine passes to block 256; if not it proceeds to decision block 252. In decision block 252 if there is a trap with a matching scope, the routine passes to block 253; otherwise it proceeds to decision block 255. In block 253 a reply is made to the trap request, and the routine then passes to block 254, where a request to remove the trap is broadcast. After block 254 the routine passes to block 256.

In decision block 255 if more traps are set on the same process name, the routine returns to decision block 252; if not it proceeds to block 256.

FIG. 12F shows a flowchart illustrating an operation to Cancel a Process Creation Trap. In decision block 260, if own broadcast is received, the routine terminates; else in decision block 261 it is checked if any scope is specified in the cancel request. If yes, it proceeds to decision block 262 to check if the scope belongs to a remote node; else it proceeds to block 265.

If a remote scope was specified, the request is forwarded to the next node in block 263; else in decision block 264 the correctness of the specified scope is checked: whether the scoping process exists and whether it is a context process. If the local scope is incorrect, the request is rejected and the routine terminates; else it proceeds to block 265.

In block 265, a trap that satisfies the specification of the cancel request is searched for, and in decision block 266 it is checked if such trap was found; if not, it proceeds to block 272; else in decision block 267 it is checked if the located trap contains a specific process name. If yes, in block 270 all traps are removed from the hashed list of named process traps that specify the same process name and a scope that encompasses the scope specified in the cancel request; if not, in block 271 all traps are removed from the list of unnamed process traps that specify an encompassing scope.

If no traps have been found on the node or when all matching traps have been removed, the routine proceeds to decision block 272 to check whether the cancel request has to be broadcast. If yes, it proceeds to block 273 to broadcast the cancel request; else it directly proceeds to block 272 to reply to the cancel request if requested or to free the request message.

FIG. 12G shows a flowchart illustrating an operation to Check If a Creation Trap is Set. In decision block 280 a check is made to see whether the trap counter is set to zero; if so the routine passes to block 281 to return a FALSE indication; if not it passes to block 282, where it finds the first trap with a matching name hash and then proceeds to decision block 283.

In decision block 283 if the name to check is the same as in the trap and the created process is in the scope of the trap, the routine passes to block 284, where the trap is locked, and then to block 285 to return a TRUE indication; if not it passes to decision block 286. In decision block 286 if there are more traps with a matching name hash, the routine returns to decision block 283; if not it proceeds to block 287.

In decision block 287 a similar algorithm is used to determine if there is any unnamed creation trap set such that the new process is in the scope of the trap; if yes, the routine proceeds to block 288 to return with a FALSE Boolean value, indicating that no creation trap to resolve has been found.

FIG. 12H shows a flowchart illustrating an operation to Cancel a Process Termination Trap. In decision block 290 if a target process is specified, the routine passes to decision block 292; otherwise it passes to block 287, where it checks if a scope is specified in the trap cancellation request. In decision block 292 if the process is expected on the same node, the routine passes to decision block 294; if not it passes to block 293, where the termination trap is forwarded in the logical ring and terminated.

In decision block 294 if the target process exists and the trap is set, the routine passes to block 295, where all traps set by the cancelling process are removed, and it passes then to block 296, where a reply is generated if it has been requested. In decision block 294 if the conditions are not true, then the routine passes to block 296 and terminates.

In decision block 287, if no cancellation scope is specified either, the request message is rejected as a bad request in block 291; else it proceeds to block 298, where all relevant scoped termination traps are cancelled using a similar algorithm and the routine exits.

It will be apparent to those skilled in the art that the herein disclosed invention may be modified in numerous ways and may assume many embodiments other than the preferred form specifically set out and described above. For example, the invention may be implemented on other types of data processing systems. It may also be used to provide additional attributes regarding creaded and/or terminated processes, such as whether the process is a context process. Also, it may be used for providing notification of other types of events.

Accordingly, it is intended by the appended claims to cover all modifications of the invention.

## Claims

1. In a distributed data processing system comprising a plurality of interconnected nodes (172, 176; FIG. 9), said system comprising a plurality of processes (a, b, x), said processes communicating with one another by means of messages, a method of providing a notification message when a process is created on one of said nodes , said method comprising the steps of:
a) providing a process manager process (172) on said one node;
b) at least one requesting process providing a request message to said process manager process to generate a notification message for said at least one requesting process whenever a process is created on said one node;
and characterised by
c) said process manager process setting a process creation trap (183,186,188,190, Fig.10) upon receiving said request message; and
d) said process manager process sending said notification message to said at least one requesting process and releasing said process creation trap upon creation of said process.

2. The method of providing a notification message recited in claim 1, wherein said request message designates a process with a particular name.

3. The method of providing a notification message recited in claim 1, wherein said request message originates from a plurality of nodes, and wherein said notification message is transmitted to said plurality of nodes.

4. The method of providing a notification message recited in claim 1, wherein said system comprises a plurality of nodes, wherein said request message is generated by any process on one of said nodes and is retransmitted to said other nodes, wherein said notification message is transmitted to said one node from the node where the new process is created, and wherein said one node generates the reply to said requesting process.

5. The method of providing a notification message recited in claim 1, wherein said request message may be generated by any one or more of said plurality of processes in said system.

6. In a distributed data processing system comprising a plurality of interconnected nodes (172, 176, FIG. 9), said system comprising a plurality of processes (a, b, x), said processes communicating with one another by means of messages, a method of providing a notification message when a process is terminated on one of said nodes (171), said method comprising the steps of:
a) providing a process manager process (172) on said one node;
b) at least one requesting process providing a request message to said process manager process to generate a notification message for said at least one requesting process whenever a process is terminated on said one node;
and characterised by
c) said process manager process setting a process termination trap upon receiving said request message; and
d) said process manager process sending said notification message to said at least one requesting process and releasing said process termination trap upon termination of said process.

7. The method of providing a notification message recited in claim 6, wherein said request message designates a process with a particular name.

8. The method of providing a notification message recited in claim 6, wherein said request message originates from a plurality of nodes, and wherein said notification message is transmitted to said plurality of nodes.

9. The method of providing a notification message recited in claim 6, wherein said system comprises a plurality of nodes, wherein said request message is generated by one of said nodes and is retransmitted to said other nodes, and wherein said notification message is transmitted to said one node from the node where the process is terminated.

10. The method of providing a notification message recited in claim 6, wherein said request message may be generated by any one or more of said plurality of processes in said system.

## Patentansprüche

1. Ein Verfahren zur Lieferung einer Benachrichtigungsmitteilung in einem verteilten Datenverarbeitungssystem mit einer Mehrzahl von zusammengeschalteten Knoten (172, 176; Fig. 9) bei Erzeugung eines Prozesses auf einem der Knoten, wobei das System eine Mehrzahl von Prozessen (a, b, x) umfaßt, wobei die Prozesse miteinander durch Meldungen kommunizieren, wobei das Verfahren die Schritte aufweist:
a) Schaffen eines Prozeßmanager-Prozesses (172) auf dem einen Knoten;
b) wobei wenigstens ein Anforderungsprozeß eine Anforderungsmeldung an den Prozeßmanager-Prozeß sendet, so daß er eine Benachrichtigungsmitteilung für den wenigstens einen Anforderungsprozeß generiert, wenn ein Prozeß auf dem einen Knoten erzeugt wird;
und dadurch gekennzeichnet, daß
c) der Prozeßmanager-Prozeß auf Empfangen der Anforderungsmeldung hin ein Prozeßerzeugungs-Trap (183, 186, 188, 190, Fig. 10) setzt; und
d) der Prozeßmanager-Prozeß auf Erzeugung des Prozesses hin eine Benachrichtigungsmitteilung an den wenigstens einen Anforderungsprozeß sendet und das Prozeßerzeugungs-Trap freigibt.

2. Das Verfahren zur Lieferung einer Benachrichtigungsmitteilung nach Anspruch 1, in welchem die Anforderungsmeldung einen Prozeß mit einem bestimmten Namen bezeichnet.

3. Das Verfahren zur Lieferung einer Benachrichtigungsmitteilung nach Anspruch 1, in welchem die Anforderungsmeldung von einer Mehrzahl von Knoten stammt, und in welchem die Benachrichtigungsmitteilung auf die Mehrzahl der Knoten übertragen wird.

4. Das Verfahren zur Lieferung einer Benachrichtigungsmitteilung nach Anspruch 1, in welchem das System eine Mehrzahl von Knoten umfaßt, in welchem die Anforderungsmeldung durch irgendeinen Prozeß auf einem der Knoten generiert und auf die anderen Knoten weitergegeben wird, in welchem die Benachrichtigungsmitteilung auf den einen Knoten der Knoten, auf dem der neue Prozeß erzeugt wird, übertragen wird, und in welchem der eine Knoten die Antwort auf den Anforderungsprozeß generiert.

5. Das Verfahren zur Lieferung einer Benachrichtigungsmitteilung nach Anspruch 1, in welchem die Anforderungsmeldung durch irgendeinen oder mehrere der Mehrzahl der Prozesse in dem System generiert werden kann.

6. Ein Verfahren zur Lieferung einer Benachrichtigungsmitteilung in einem verteilten Datenverarbeitungssystem mit einer Mehrzahl von zusammengeschalteten Knoten (172, 176; Fig. 9) bei Beendigung eines Prozesses auf einem der Knoten, wobei das System eine Mehrzahl von Prozessen (a, b, x) umfaßt, wobei die Prozesse miteinander durch Meldungen kommunizieren, wobei das Verfahren die Schritte aufweist:
a) Schaffen eines Prozeßmanager-Prozesses (172) auf dem einen Knoten;
b) wobei wenigstens ein Anforderungsprozeß eine Anforderungsmeldung an den Prozeßmanager-Prozeß sendet, so daß er eine Benachrichtigungsmitteilung für den wenigstens einen Anforderungsprozeß generiert, wenn ein Prozeß auf dem einen Knoten beendet wird;
und dadurch gekennzeichnet, daß
c) der Prozeßmanager-Prozeß auf Empfangen der Anforderungsmeldung hin ein Prozeßbeendigungs-Trap (183, 186, 188, 190, Fig. 10) setzt; und
d) der Prozeßmanager-Prozeß auf Beendigung des Prozesses hin eine Benachrichtigungsmitteilung an den wenigstens einen Anforderungsprozeß sendet und das Prozeßbeendigungs-Trap freigibt.

7. Das Verfahren zur Lieferung einer Benachrichtigungsmitteilung nach Anspruch 6, in welchem die Anforderungsmeldung einen Prozeß mit einem bestimmten Namen bezeichnet.

8. Das Verfahren zur Lieferung einer Benachrichtigungsmitteilung nach Anspruch 6, in welchem die Anforderungsmeldung von einer Mehrzahl von Knoten stammt, und in welchem die Benachrichtigungsmitteilung auf die Mehrzahl der Knoten übertragen wird.

9. Das Verfahren zur Lieferung einer Benachrichtigungsmitteilung nach Anspruch 6, in welchem das System eine Mehrzahl von Knoten umfaßt, in welchem die Anforderungsmeldung durch einen der Knoten generiert und auf die anderen Knoten weitergegeben wird, und in welchem die Benachrichtigungsmitteilung auf den einen Knoten der Knoten, auf dem der Prozeß beendet wird, übertragen wird.

10. Das Verfahren zur Lieferung einer Benachrichtigungsmitteilung nach Anspruch 6, in welchem die Anforderungsmeldung durch irgendeinen oder mehrere der Mehrzahl der Prozesse in dem System generiert werden kann.

## Revendications

1. Procédé permettant de fournir un message de notification lorsqu'un traitement est créé sur un noeud considéré d'une pluralité de noeuds interconnectés, ce procédé étant destiné à être utilisé dans un système de traitement de données réparti comprenant ladite pluralité de noeuds (172, 176; figure 9), ledit système comprenant une pluralité de traitements (a, b, x), lesdits traitements communiquant entre eux par l'intermédiaire de messages, ledit procédé comprenant les opérations suivantes :
a) produire, sur ledit noeud considéré, un traitement gestionnaire de traitements (172);
b) au moins un traitement demandeur fournissant un message de demande à destination dudit traitement gestionnaire de traitements afin qu'il produise un message de notification relatif audit ou auxdits traitements demandeurs à chaque fois qu'un traitement est créé sur ledit noeud considéré ;
et caractérisé en ce que :
c) le traitement gestionnaire de traitements positionne une interruption (183, 186, 188, 190, figure 10) pour création de traitement dès la réception du message de demande ; et
d) ledit traitement gestionnaire de traitements envoie ledit message de notification audit ou auxdits traitements demandeurs et abandonne ladite interruption pour création de traitement dès la création dudit traitement.

2. Procédé permettant de fournir un message de notification selon la revendication 1, où ledit message de demande désigne un traitement à l'aide d'un nom particulier.

3. Procédé permettant de fournir un message de notification selon la revendication 1, où ledit message de demande est issu d'une pluralité de noeuds, et où ledit message de notification est transmis à ladite pluralité de noeuds.

4. Procédé permettant de fournir un message de notification selon la revendication 1, où ledit système comprend une pluralité de noeuds, où ledit message de demande est produit par un traitement quelconque sur l'un, considéré, desdits noeuds et est retransmis auxdits autres noeuds, où ledit message de notification est transmis audit noeud considéré depuis le noeud dans lequel le nouveau traitement est créé, et où ledit noeud considéré produit la réponse destinée audit traitement demandeur.

5. Procédé permettant de fournir un message de notification selon la revendication 1, où ledit message de demande peut être produit par l'un quelconque ou plusieurs des traitements de ladite pluralité de traitements dans ledit système.

6. Procédé permettant de fournir un message de notification lorsqu'un traitement cesse sur un noeud considéré d'une pluralité de noeuds interconnectés (171), ce procédé étant destiné à être utilisé dans un système de traitement de données réparti comprenant ladite pluralité de noeuds (172, 176; figure 9), ledit système comprenant une pluralité de traitements (a, b, x), lesdits traitements communiquant entre eux par l'intermédiaire de messages, ledit procédé comprenant les opérations suivantes :
a) produire, sur ledit noeud considéré, un traitement gestionnaire de traitements (172);
b) au moins un traitement demandeur fournissant un message de demande à destination dudit traitement gestionnaire de traitements afin qu'il produise un message de notification relatif audit ou auxdits traitements demandeurs à chaque fois qu'un traitement cesse sur ledit noeud considéré ;
et caractérisé en ce que :
c) le traitement gestionnaire de traitements positionne une interruption pour cessation de traitement dès la réception du message de demande ; et
d) ledit traitement gestionnaire de traitements envoie ledit message de notification audit ou auxdits traitements demandeurs et abandonne ladite interruption pour cessation de traitement dès la cessation dudit traitement.

7. Procédé permettant de fournir un message de notification selon la revendication 6, où ledit message de demande désigne un traitement à l'aide d'un nom particulier.

8. Procédé permettant de fournir un message de notification selon la revendication 6, où ledit message de demande est issu d'une pluralité de noeuds, et où ledit message de notification est transmis à ladite pluralité de noeuds.

9. Procédé permettant de fournir un message de notification selon la revendication 6, où ledit système comprend une pluralité de noeuds, où ledit message de demande est produit par un desdits noeuds et est retransmis auxdits autres noeuds, et où ledit message de notification est transmis audit noeud considéré depuis le noeud dans lequel le nouveau traitement cesse.

10. Procédé permettant de fournir un message de notification selon la revendication 6, où ledit message de demande peut être produit par l'un quelconque ou plusieurs des traitements de ladite pluralité de traitements dans ledit système.
